Europäisches Patentamt

European Patent Office

Office européen des brevets

(19)

(11) Veröffentlichungsnummer: **0 084 613**
**B1**

(12) **EUROPÄISCHE PATENTSCHRIFT**

(45) Veröffentlichungstag der Patentschrift: **15.04.87**

(21) Anmeldenummer: **82110250.6**

(22) Anmeldetag: **06.11.82**

(51) Int. Cl.⁴: **G 05 D 23/24, F 24 D 19/10**

(54) Zeitgesteuerter Heizungsregler mit Nachtabsenkung.

(30) Priorität: **23.01.82 DE 3202104**

(43) Veröffentlichungstag der Anmeldung:
**03.08.83 Patentblatt 83/31**

(45) Bekanntmachung des Hinweises auf die
Patenterteilung:
**15.04.87 Patentblatt 87/16**

(84) Benannte Vertragsstaaten:
**CH FR GB IT LI SE**

(56) Entgegenhaltungen:
DE-A-1 765 377
DE-A-2 231 096
FR-A-2 485 170
GB-A-1 193 711
US-A-3 979 059

ELEKTROWÄRME INTERNATIONAL, Band 26,
Nr. 9, September 1968, Seiten 316-322, Essen,
DE., P. SCHLÜTER: "Steuer- und Regelgeräte
für elektrische Wärmespeicherheizungen"

(73) Patentinhaber: **DIETER GRÄSSLIN
Feinwerktechnik
Bundesstrasse 36
D-7742 St. Georgen (DE)**

(72) Erfinder: **Kammerer, Gerd
Schiltachweg 15
D-7742 St. Georgen (DE)**

(74) Vertreter: **Thoma, Friedrich Xaver, Dipl.-Ing.(FH)
Leimengrubweg 12
D-7612 Haslach i.K. (DE)**

Courier Press, Leamington Spa, England.

**Beschreibung**

Die Erfindung betrifft einen zeitgesteuerten Heizungsregler mit Nachtabsenkung, mit den Merkmalen nach dem ersten Teil des Patentanspruchs 1.

Bei derartigen Heizungsreglern wird die Nachtabsenkung zu einem Zeitpunkt beendet, bei welchen noch sichergestellt ist, daß durch die folgende Aufheizperiode, auch bei relativ nidrigen Außentemperaturen, zu einem gewünschten Zeitpunkt die richtige Raumtemperatur erreicht wird.

Aus der GB—A—1 193 711 ist ein zeitgesteuerter elektronisch-mechanischer Heizungsregler mit Nachtabsenkungssteuerung, mit einem Außentemperaturfühler und mit einem Innenraumtemperaturfühler bekannt, welcher sicherstellt, daß zu einem bestimmten gewünschten Zeitpunkt die richtige Raumtemperatur erreicht ist, die dann über einen bestimmten Nutzungszeitraum konstant gehalten wird, um danach insbesondere während der Nachtstunden, in Abhängigkeit von der Außentemperatur um einen bestimmten Wert abgesenkt zu werden.

Die Steuerschaltung besteht dort im wesentlichen aus einer elektrischen Widerstandsbrückenschaltung in der die Fühler für die Außentemperatur, die Innenraumtemperatur, sowie der mechanischzeitgesteuerte Widerstand über den auch die Nachtemperaturabsenkung gesteuert wird, enthalten ist. Die Zeitsteuerung läuft dort nach einem vorgegebenen mechanisch über eine Kurvenführung gesteuerten Programmverlauf ab.

Ein weiterer, nach einem vergleichbaren Steuerprogramm mit denselben Steuerkomponenten wie bei der GB—A—1 193 711 arbeitender Heizungsregler mit Nachtabsenkung wurde aus der US—A—3 979 059 bekannt. Bei diesem Regler können der Nutzungszeitraum der Heizung und der Nachtabsenkungszeitraum und dessen Temperaturabsenkungsgröße frei programmiert werden. Als Steuerschaltung wird auch dort eine elektrische Widerstandsbrückenschaltung verwendet. Die Zeitsteuerung erfogt über eine Zeitschaltuhr, die sowohl den zeitabhängig veränderlichen Widerstand in der Bückenschaltung, als auch den Schalter zur Nachtabsenkung der Heiztemperatur ein- und ausschaltet.

Außerdem ist aus dem Taschenbuch für Heizung und Klimatechnik, 60. Ausgabe 1979, Seite 610, ein Heizungsregler mit Nachtabsenkung der Heiztemperatur bekannt, welcher ebenfalls als Steuerschaltung eine elektrische Widerstandsbrücke, mit in der Brückenschaltung angeordneten Außentemperatur- und Innenraumtemperaturfühlern undv mit einem einstallbaren Widerstand an dem die Nachttemperaturabsenkung eingestellt werden kann, der von einer Schaltuhr, zu einem gewünschten oder ermittelten Zeitpunkt über einen elektrischen Schalter elektrisch parallel zum Außentemperaturfühler geschaltet werden kann.

Diese bekanntgewordenen Heizungsregler sind mit dem Nachteil behaftet, daß dort durch die unmittelbare elektrische und elektromechanische Verknüpfung der einzelnen Komponenten der Steuerschaltung mit der Zeitsteuer- oder Zeitschaltsteuerung, insbesondere bei hohen Außentemperaturen die Nachtabsenkung zeitlich zu früh, bezogen auf den Zeitpunkt an dem die richtige Raumtemperatur gewünscht wird, abgeschaltet wird.

Der Erfindung liegt die Aufgabe zugrunde, eine Einrichtung zu schaffen, die den vorgenannten Nachteil nicht aufweißt, sondern die eine Beendigung der Nachtabsenkung so nahe wie möglich an den Zeitpunkt heranführt, an dem die gewünschte Raumtemperatur erreicht sein soll. Die niedrigste Außentemperatur, die dort einer Heizkurve in Abhängigkeit von der berücksichtigten Klimazone zugrunde gelegt worden ist, soll dabei die zeitliche Länge der Aufheizperiode festlegen. Außerdem soll sichergestellt sein, daß die Außentemperatur einen unmittelbaren Einfluß auf die zeitliche Länge einer Aufheizperiode hat.

Diese Aufgabe wird mit den Merkmalen im kennzeichnendebn Teil des Patentanspruchs 1 gelöst.

Wie dies im einzelnen gedacht, ausgeführt und weitergebildet werden kann, wird anhand von einem Beispiel und einem Diagram näher erläutert. Es zeigen

Fig. 1 ein schematisches Schaltbild enes außentemperaturabhängig gesteuerten Heizungsreglers mit einer Einrichtung nach der Erfindung und

Fig. 2 ein Diagramm aus welchem die zeitliche Länge einer Aufheizperiode in Abhängigkeit von der Außentemperatur sichtbar ist.

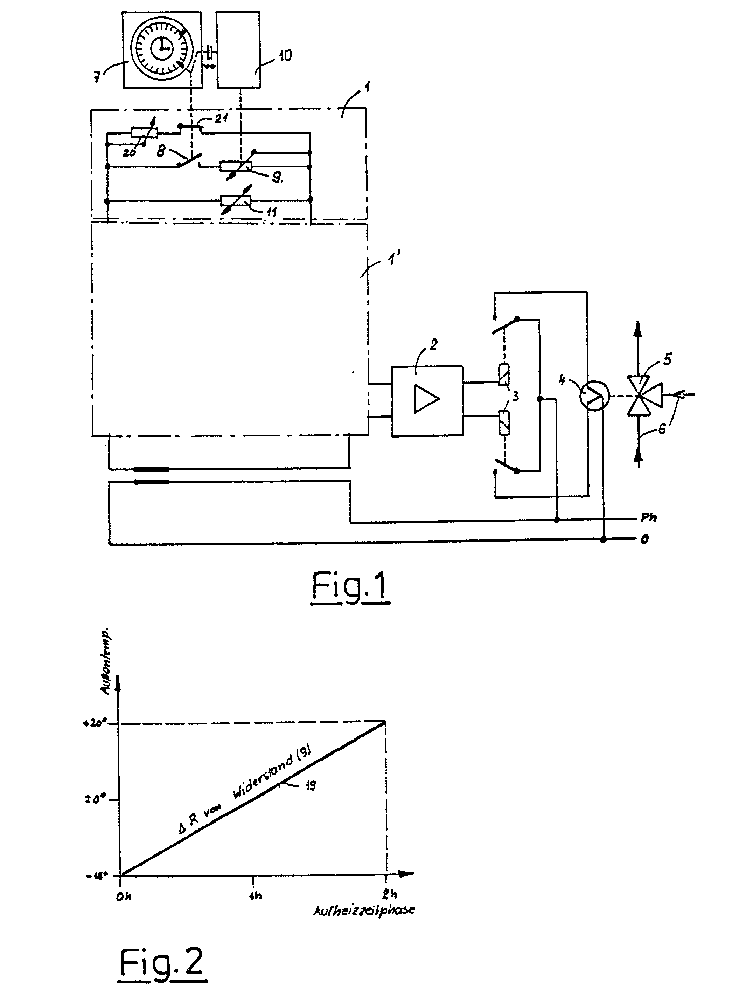

Die Fig. 1 zeigt zunächst im wesentlichen eine, durch die strichpunktierte Linie begrenzte, elektrische Brückenschaltung 1, die über einen elektronischen Signalverstärker 2 eine elektromagnetische Kontaktschalteinrichtung 3 steuert, zur Betätigung eines Stellmotors 4, der ein Mischventil 5 in einem Heizkreislauf 6 beaufschlagt. 7 bezeichnet dort eine Schaltuhr mit einem elektrischen Schalter 8, dessen Schaltzeitpunkt auf der Schaltuhr 7 vorwählbar ist und der dort in Reihe liegt mit einem veränderlichen Widerstand 9, die zusammen in einem Brückenzweig der Brückenschaltung 1 angeordnet sind.

Der Widerstand 9 ist mechanisch mit einem Getriebe 10 gekuppelt, das nicht nur von der Schaltuhr zu demselben Schaltzeitpunkt gestartet wird, zu dem auch der Schalter 8 von der Schaltuhr 7 betätigt wird, sondern das Getriebe 10 wird auch zeitgesteuert angetrieben und damit der Widerstand 9 zeitgesteuert verändert. Der Antrieb des Getriebes 10 und damit die Veränderung des Widerstandes 9 kann vom Zeitmeßglied der Schaltuhr 7 aus erfolgen. Das Getriebe 10 wird dort zum betreffenden Schaltzeitpunkt in den zeithaltenden Antrieb der Schaltuhr 7 eingekuppelt. Die Ziffer 11 zeigt einen Außentemperaturfühler, der parallel zum Widerstand 9 und dem Schalter 8 in einen Brückenzeig angeordnet ist. Die übrigen Komponenten der Brückenschaltung sind in dem nicht näher ausgeführten Teil 1a enthalten.

Die Funktion der erfindungsgemäßen Einrichtung ist nun folgende: Nach dem üblichen Einstellen der Steilheit der Heizkurve und der Vorlauftemperatur wird ermittelt, ob beispielsweise bei einer niedrigsten Außentemperatur von −15 Grad C und einer gewünschten Raumtemperatur von +20 Grad C eine zweistündige Aufheizperiode genügt, bei einer bestimmten Nachtabsenkung von 5 Grad C die gewünschte Raumtemperatur zu einem gewünschten Zeitpunkt zu erreichen. Ist dies der Fall, dann wird z.B. ein Schaltreiter auf der Schaltscheibe der Schaltuhr 7 um zwei Stunden bezogen auf den gewünschten Zeitpunkt zurückversetzt programmiert. Die Skala der Schaltscheibe kann auch um z.B. zwei Stunden zum Schaltpunkt versetzt aufgebracht werden. Dieser Schaltreiter betätigt demnach zwei Stunden vor dem gewünschten Zeitpunkt den Schalter 8 und setzt gleichzeitig das Getriebe 10 in Funktion, das den Widerstand 9 nunmehr zeitgesteuert verändert.

Herrscht z.B. eine Außentemperatur von −15 Grad C, dann setzt nach der Diagrammkurve, gemäß Fig. 2, unmittelbar die Aufheizphase ein, die zum gewünschten Zeitpunkt mit dem Erreichen der gewünschten Raumtemperatur beendet ist.

Herrscht jedoch nur ene Außentemperatur von ±0 Grad °C, dann beginnt nach der Kurve 19 in Fig. 2 die Aufheizphase erst eine Stunde vor dem Zeitpunkt, an dem die gewünschte Raumtemperatur erreicht sein soll.

Herrscht jedoch nur eine Außentemperatur von +15 Grad C, dann verschiebt der zeitgesteuerte Widerstand 9 den Beginn der Aufheizphase bis auf ca. 10 Minuten vor den Zeitpunkt, an dem die gewünschte Raumtemperatur erreicht sein soll.

Die Vorwahl der Nachtabsenkung kann an einem veränderlichen Widerstand 20 vorgenommen werden, der in bekannter Weise von enem weiteren Schalter 21 gesteuert werden kann.

Vorteilhaft bei dieser Einrichtung ist besonders die optimierende Vorwahl der Aufheizperiode, die zeitlich unmittelbar vor den gewünschten Zeitpunkt gelegt werden kann, an dem die gewünschte Raumtemperatur erreicht sein soll.

Die erfindungsgemäße Einrichtung beschränkt sich nicht nur auf Vollbrückenschaltungen, sondern kann auch in Spannungsteilerschaltungen zum Einsatz kommen, die eine Halbbrückenschaltung darstellen.

## Patentanspruch

Zeitgesteuerter Heizungsregler mit einer der Erzeugung eines Steuersignals für ein Stellglied (5, 6) einer Heizanlage dienenden Reglerschaltung, welche eine Brückenschaltung (1) umfaßt, in der ein von der Außentemperatur beaufschlagter temperaturabhängiger Widerstand (11) und ein, das Ausmaß einer Nachtabsenkung der Heiztemperatur bestimmender Widerstand (20), der über einen ersten Schalter (21) in die Brückenschaltung (1) einschaltbar ist, enthalten sind, sowie einer Zeitschaltuhr (7) zur Schliebung des ersten Schalters (21) zu einem ersten, von der Zeitschaltuhr (7) bestimmten Zeitpunkt, gekennzeichnet durch, einen steuerbaren Widerstand (9), der über einen in Serie mit ihm liegenden und ebenfalls von der Zeitschaltuhr (7) betätigten zweiten Schalter (8) zu einem zweiten von der Zeitschaltuhr (7) bestimmten Zeitpunkt anstelle des die Nachtabsenkung bestimmenden Widerstandes (20) in diese Brückenschaltung (1) einschaltbar ist, wobei der steuerbare Widerstand (9) dem temperaturabhängigen Widerstand (11) parallel geschaltet wird, sowie ein zu dem zweiten vorgegebenen Zeitpunkt an der Zeitschaltuhr (7) ankuppelbares und von der Zeitschaltuhr (7) angetriebenes Getriebe (10) zur kontinuierlichen Verstellung des steuerbaren Widerstandes (9) während eines durch die Zeitschaltuhr (7) festgelegten Zeitraums über einen Widerstandsbereich, dessen Grenzen von der tiefsten zu berücksichtigenden Außentemperatur einerseits und der zu erreichenden Heiztemperatur andererseits bestimmt sind.

## Revendication

Régulateur de chauffage chronologiquement programmable comprenant un circuit de régulation servant à la génération d'un signal de commande d'un élément de commande (5, 6) d'une installation de chauffage, circuit qui comprend un montage en pont (1) dans lequel sont montées une résistance (11) fonction de la température extérieure qui agit sur elle et une résistance (20) déterminant l'importance de l'abaissement nocturne de la température de chauffage, cette dernière résistance (20) pouvant être insérée dans le montage en pont (1) par un premier commutateur (21), ainsi qu'une horloge de programmation (7) chargée de fermer le premier commutateur (21) à une premier moment déterminé par ladite horloge (7), caractérisé par le fait qu'il comprend une résistance variable (9) qui peut être insérée dans ce montage en pont (1) à la place de la résistance (20) déterminant l'abissement nocturne à un deuxième moment déterminé par l'horloge (7) au moyen d'un deuxième interrupteur (8) commandé également par ladite horloge (7), tandis que la résistance variable (9) est montée en parallèle avec la résistance (11) fonction de la température, par le fait qu'il comprend un engrenage (10) destiné à faire varier de manière continue la résistance variable (9) à l'intérieur d'une plage de résistances pendant le laps de temps déterminé par l'horloge (7), ledit engrenage (10) étant entraîné par ladite horloge (7) et pouvant être enbrayé sur ladite horloge (7) au deuxième moment prédéterminé, les limites de ladite plage de résistances étant déterminées d'une part par la température extérieure la plus basse à prendre en considération et d'autre part par la température de chauffage à atteindre.

## Claims

1. A time-controlled heating regulator having a regulator circuit which serves to produce a control signal for a control element (5, 6) of a heating system and which comprises a bridge circuit (1) which contains a temperature-dependent resistor (11), which is influenced by the external temperature, and a resistor (20) which determines the extent of a night-time reduction in the heating temperature and which can be connected into the bridge circuit (1) through a first switch (21),

and a time switch clock (7) which serves to close the first switch (21) at a first time determined by the time switch clock (7), characterised by a controllable resistor (9) which, by way of a second switch (8) which is arranged in series with said resistor (9) and is also actuated by the time switch clock (7), can be connected into the bridge circuit (1) in place of the resistor (20) which determines the night-time reduction, at a second time determined by the time switch clock (7), the controllable resistor (9) being connected in parallel with the temperature-dependent resistor (11), and a transmission (10) which can be coupled to the time switch clock (7) at the second determined time and is driven by the time switch clock (7) and which serves continuously to adjust the controllable resistor (9) during a time period fixed by the time switch clock (7) over a resistance range, the limits of which are determined, on the one hand, by the lowest external temperature to be taken into account and, on the other hand, by the heating temperature to be reached.

Fig.1

Fig.2